# FASCICULE DE BREVET EUROPEEN

(11) **EP 1 644 679 B1**
(45) Date de publication et mention de la délivrance du brevet: **04.04.2012**
(21) Numéro de dépôt: 04767509.5
(22) Date de dépôt: 29.06.2004
(51) Int. Cl.: F26B 9/10, F26B 25/04, F26B 3/28

(54) **DISPOSITIF DE TRAITEMENT D'UN DECHET HUMIDE**
VORRICHTUNG ZUR BEHANDLUNG VON FEUCHTEM ABFALL
DEVICE FOR TREATING DAMP WASTE

(30) Priorité: 02.07.2003 FR 0308037
(43) Date de publication de la demande: 12.04.2006
(73) Titulaire: Veolia Water Solutions & Technologies Support, 94410 Saint-Maurice (FR); SARL Luvain, 94410 Saint-Maurice (FR)
(72) Inventeur: LEVASSEUR, Jean-Pierre, F-78112 Fourqueux (FR); BREHM, Marc, F-34500 Beziers (FR); TEULET, Christophe, F-94100 Sait Maur des Fosses (FR)
(74) Mandataire: Quantin, Bruno Marie Henri
(86) Numéro de dépôt international: PCT/FR2004/001665
(87) Numéro de publication internationale: WO 2005/012815

(56) Documents cités:
- EP-A- 0 424 711
- WO-A-01/98234
- DE-A- 4 315 321
- DE-A- 19 636 992
- DE-A- 19 963 092
- FR-A- 2 539 777
- FR-A- 2 611 419
- FR-A- 2 637 968
- FR-A- 2 717 103
- FR-A- 2 767 818
- GB-A- 521 894
- GB-A- 191 311 220
- US-A- 3 553 844
- US-A- 4 410 348
- US-B1- 6 243 968
- US-B1- 6 342 085

## Description

### I - Domaine technique et art antérieur

L'élimination des boues, en particulier dans le domaine de l'épuration des eaux usées, devient de plus en plus critique (quantités croissantes, contraintes techniques pour la mise en décharge plus sévères, réactions passionnées des riverains....)

Une technique particulièrement efficace dans son principe pour minimiser les volumes de boues consiste à sécher ces boues de façon thermique. Les siccités atteintes sont très élevées (plus de 80 à 90 % en général). Ensuite, en fonction de leur nature, les boues séchées peuvent être valorisées en incinération comme combustible ou en agriculture comme matière fertilisante, voire tout simplement être mises en décharge lorsqu'elles ne présentent aucun intérêt de par leurs caractéristiques physico-chimiques.

Si, effectivement, cette technique du séchage thermique est simple dans son principe, elle l'est beaucoup moins dans sa pratique. Par exemple, au cours du séchage, les boues ont tendance à devenir de plus en plus visqueuses et il faut alors des quantités d'énergie importantes pour brasser ces boues et pour transférer la chaleur au coeur de ces boues devenues très compactes. En outre, les températures atteintes avec certaines techniques de séchage sont parfois la cause d'incendies et les fortes teneurs en poussières dans les gaz de séchage peuvent engendrer des explosions.

Pour tenir compte de ces contraintes techniques, les installations de séchage thermique sont relativement coûteuses en investissement et en exploitation (coût de l'énergie principalement). C'est pourquoi ce type de technologie n'est mis en place que sur des installations de taille conséquente.

Pour les unités de petite et moyenne capacité, parmi les différentes solutions connues, il existe une solution simple et économique qui repose sur l'utilisation d'une énergie renouvelable et gratuite, l'énergie solaire. La solution met en oeuvre un séchage à l'air par voie naturelle, c'est à dire un séchage solaire sous serre.

En pratique, les technologies de séchage solaire utilisent le même principe de fonctionnement : les boues à sécher sont disposées en couches plus ou moins minces à l'intérieur d'une serre. De manière à mettre en contact la partie humide des boues avec l'air ambiant, des systèmes de retournement des boues sont utilisés pour accélérer le séchage. Dans le brevet DE-43 15321 ou encore DE-19836268, un appareil rotatif roulant sur des rails brasse les boues sur toute la largeur du tas. Le brevet US-6 243 968 fait état d'un retourneur ayant la forme d'un chariot alors que dans le cas du brevet FR-2 789 335, il s'agit d'un système équipé de socs de charrue tracté dans la boue épandue sur le sol. Le brevet EP-0 899 529 fait état d'un appareil de brassage des boues de façon aléatoire sur une aire plane.

Dans un domaine différent, à savoir celui du compostage de déchets organiques disposés en andains, une des techniques permettant d'aérer le produit en fermentation consiste à utiliser un retourneur enjambeur. En fonctionnement, le châssis de cet appareil est situé au-dessus de l'andain et repose de chaque côté sur des roues assurant son avancement. Dans la partie basse, entre les roues, se trouve un ensemble d'agitation permettant de brasser le produit en fermentation au moment du passage du retourneur. Ce type a fait l'objet de divers brevets (par exemple, DE-19 636992, EP-0 346 642, EP-0 755 368).

Quant au document FR - 2 611 419, il propose, sur une infrastructure confinant latéralement des couches superposées, de procéder à des phases successives et indépendantes d'épandage et de brassage/retournement.

### II. Problème technique et solution.

Ces solutions connues donnent globalement satisfaction, mais méritent d'être perfectionnées.

L'invention a pour objet d'optimiser l'aération du matériau humide (notamment des boues de station d'épuration) lors d'un séchage à l'air par voie naturelle (sans apport thermique volontaire), c'est à dire en pratique lors d'un séchage sous serre, notamment en évitant la formation d'une croûte (on parle de croûtage) en surface de l'andain (qui limite les transferts avec l'extérieur) et en permettant un renouvellement fréquent de la surface à sécher ainsi que de l'interface de contact entre l'air ambiant et les boues.

L'invention propose à cet effet un procédé de séchage solaire d'un matériau humide en vrac selon lequel on étale ce matériau humide en couches successives en sorte de former une masse humide, chaque couche étant, juste après son étalement, mélangée mécaniquement avec la masse humide sous-jacente.

L'invention propose en outre un dispositif de traitement de matériau humide en vrac, adapté à la mise en oeuvre du procédé précité, comportant un châssis dirigeable portant, en partie haute, un sous-ensemble de distribution de matériau humide en vrac adapté à distribuer en couche ce matériau humide sur le sol et, en partie basse, un sous-ensemble de retournement comportant un système de brassage adapté à brasser au moins cette couche.

On appréciera que, selon l'invention, on combine la distribution et le retournement du matériau humide en vrac à sécher, ce retournement concernant à la fois du matériau déjà en cours de séchage et du matériau qui vient juste d'être distribué, ce qui assure un bon mélange et un bon séchage du matériau dans toute sa masse ; en outre, on obtient une bonne optimisation des surfaces de séchage, de la manutention du matériau humide à sécher et des phénomènes physiques de séchage à l'air et de fermentation aérobie.

Il a déjà été proposé, dans le document FR - 2 717 103, un dispositif mettant en oeuvre l'épandage d'un produit et, immédiatement après, son malaxage avec la couche sous-jacente, mais il s'agit d'un contexte très différent, avec une cinétique très différente de celle d'un séchage, dans lequel le produit faisant l'objet de l'épandage est un réactif chimique (de la chaux vive) qu'il faut incorporer à la couche sous-jacente formée d'un produit à traiter.

Le matériel utilisé s'inspire, avec des adaptations tout à fait substantielles, de l'équipement mécanique du type retourneur d'andain utilisé dans le compostage des déchets.

On entend par matériau humide, tout matériau naturel ou non dont la teneur en eau (humidité) est substantielle, à l'intérieur d'une plage de valeurs possibles très large.

La présente invention peut être mise en oeuvre, de manière non exhaustive, sur les matériaux humides suivants :
- des boues issues de traitements d'eaux, de traitements d'eaux usées urbaines ou industrielles (boues primaires, boues biologiques, boues digérées, boues physico chimiques et boues mixtes)
- des déchets de l'agriculture et des industries agro-alimentaires préalablement broyés (végétaux, ....)
- des déchets inertes
- des sous produits industriels.

Selon des particularités avantageuses du procédé de l'invention, éventuellement combinées :
- les couches sont formées en bandes allongées sur lesquelles on étale une nouvelle couche de matériau humide en vrac et on mélange cette couche avec la bande sous-jacente, dans un sens longitudinal puis dans l'autre, ce qui contribue à optimiser la surface d'échange pour un volume donné de matériau humide en vrac,
- les couches sont formées en une pluralité impaire de bandes adjacentes, l'étalement de chaque couche se faisant dans un premier sens sur une première bande puis dans le sens inverse sur la bande adjacente, l'étalement sur une bande commençant près de là où s'est terminé l'étalement sur la bande précédente, puis, après étalement sur la dernière bande, un nouveau étalement sur la première bande dans ledit sens inverse ; cela permet que, sans déplacement particulier du matériel de distribution et de retournement, on brasse chaque bande dans un sens puis dans l'autre, ce qui évite qu'à la longue, une bande finisse par se déplacer longitudinalement ; bien entendu, un nombre pair est également possible,
- le mélange mécanique est réalisé en sorte de donner à la masse mélangée une forme en andain, ce qui contribue aussi à optimiser la surface d'échange pour un volume donné,
- la masse humide a une hauteur comprise entre 0.5 m et 3 m et une largeur de l'ordre de quelques mètres, ce qui correspond à des plages dimensionnelles tout à fait réalistes,
- la masse humide est formée dans une serre dont le volume d'air est renouvelé au moins 5 fois par heure,
- ce volume d'air est mis en circulation interne avec un taux de 10 à 50 fois par heure, de préférence entre 10 et 30 fois,
- l'on surveille la température, l'hygrométrie et la teneur en gaz prédéterminés de ce volume d'air et on régule en conséquence le renouvellement d'air,
- le matériau humide en vrac est formé de boues et l'on étale une nouvelle couche de ce matériau humide en vrac et on la mélange à la masse sous-jacente à une fréquence comprise entre de l'ordre d'une fois par heure et de l'ordre d'une fois par semaine, de préférence de l'ordre de 1 à 4 fois par jour,
- l'on procède à au moins une opération supplémentaire de retournement de la masse humide entre plusieurs étapes d'étalement d'une nouvelle couche, ce qui contribue à éviter la ralentissement du séchage entre deux phases de distribution/retournement de matériau en vrac.

Selon d'autres caractéristiques avantageuses de l'invention, concernant cette fois-ci le dispositif :
- le sous-ensemble de retournement comporte un rotor horizontal transversal muni de bras en saillie,
- le sous-ensemble de retournement est conformé en sorte que, après action sur un tas au sol, celui-ci ait la forme d'un andain,
- le sous-ensemble de distribution comporte un réservoir de matériau humide en vrac muni en partie basse d'une ouverture transversale de distribution et de dosage de ce matériau humide en vrac,
- l'ouverture de distribution et de dosage est de largeur réglable,
- l'ouverture transversale est ménagée entre un bord d'un fond et un bord inférieur d'une portion de paroi,
- ce fond est un tapis roulant adapté à circuler vers l'ouverture, ,
- le bord inférieur est porté par une portion mobile en hauteur formant une trappe réglable,
- il est automoteur, en ayant deux sens opposés d'avance,
- il est monté sur des chenilles.

L'invention propose enfin une installation de séchage solaire d'un matériau humide en vrac adaptée à la mise en oeuvre du procédé précité, comportant une serre sur une aire étanche, un dispositif de traitement du type précité à l'intérieur de cette serre, et un ensemble automatisé de ventilation de l'air de séchage.

Selon des caractéristiques avantageuses, éventuellement combinées:
- elle comporte en outre un ensemble de brassage interne de l'air de brassage,
- l'ensemble de ventilation de l'air de séchage comporte, en sortie, un élément de traitement chimique ou de filtrage de l'air,
- elle comporte des éléments complémentaires ménagés sur le dispositif de traitement de matériau humide en vrac et en dehors de celui-ci en vue de son guidage selon une trajectoire à l'intérieur de la serre,
- elle comporte en outre un système de régulation coopérant avec des capteurs de température et d'hygrométrie à l'intérieur de la serre,
- le système de régulation est en relié à des capteurs de gaz adaptés à surveiller la teneur en des gaz nocifs prédéterminés.

### III- Description de l'invention :

Des objets, caractéristiques et avantages de l'invention ressortent de la description qui suit, donnée à titre d'exemple illustratif non limitatif, en regard des dessins annexés sur lesquels :
- la figure 1 est un schéma de principe d'un dispositif de traitement de matériau humide en vrac selon l'invention, en cours de mise en oeuvre du procédé de l'invention,
- la figure 2 en est une vue en élévation, du côté avant, de ce dispositif dans un exemple de réalisation,
- la figure 3 en est une vue de côté, selon la flèche III de la figure 2,
- la figure 4 en est une vue en perspective,
- la figure 5 est un schéma de principe d'un tas en andain,
- la figure 6 est un schéma de principe d'une installation de traitement pour la mise en oeuvre du procédé de l'invention, représenté en une phase de départ,
- la figure 7 en est une vue après traitement d'une bande de matériau humide en vrac au sol,
- la figure 8 en est une vue après traitement d'une seconde bande de ce matériau humide en vrac,
- la figure 9 en est une vue après traitement de toutes les bandes et avant nouveau traitement de la première bande,
- la figure 10 en est une vue après ce nouveau traitement de cette première bande, et
- la figure 11 en est une vue après nouveau traitement de toutes les bandes, avant un troisième traitement de la première bande.

### Principe du séchage solaire

Dans le cas de boues contenant des matières organiques fermentescibles, le procédé de séchage solaire de l'invention vise à optimiser l'efficacité de ce séchage en favorisant, au cours de ce traitement, le déroulement de 2 processus connus en soi :
- le séchage à l'air,
- la fermentation aérobie
qui peuvent s'analyser comme suit.

La fermentation de la matière organique est réalisée par des micro-organismes en milieu aérobie, c'est-à-dire en présence d'oxygène. Les réactions qui se déroulent pendant cette fermentation sont, comme toute oxydation, exothermiques. On observe donc une montée en température importante (50 à 60°C), ce qui permet d'hygiéniser le produit en fermentation et de le sécher.

Pour effectuer cette fermentation dans les meilleures conditions, les boues à traiter sont mises sous forme de tas (de préférence des andains) d'une hauteur de préférence comprise entre 0.5 et 3 m et doivent être suffisamment poreuses pour permettre une bonne diffusion de l'oxygène au sein du tas. Pour cela, les boues brutes sont mélangées à une partie des boues séchées. Un retournement régulier du produit en fermentation assure une bonne aération, favorisant ainsi les réactions d'oxydation et donc son séchage. Ce retournement permet également, d'une part, d'évacuer les calories produites principalement sous forme de vapeur d'eau et, d'autre part, d'homogénéiser la fermentation en maintenant la porosité du mélange traité.

Ce processus de fermentation se déroule tant que les boues sont suffisamment humides. Au-delà de 50 à 60 % de matières sèches, la fermentation ralentit puis s'arrête.

Quant au séchage à l'air, il repose sur la capacité de l'air à se charger en vapeur d'eau jusqu'à sa saturation. Lors d'un procédé de séchage classique, des gaz de séchage fournissent de l'énergie au matériau par l'intermédiaire d'un échange avec la surface exposée, et c'est encore au travers d'un échange de masse avec cette surface que les gaz de séchage se chargent en vapeur d'eau qu'ils vont évacuer hors du système de séchage.

Dans le cas visé par l'invention, ce ne sont pas ces gaz de séchage qui fournissent l'énergie nécessaire à la vaporisation de l'eau mais l'énergie provenant du rayonnement solaire et de l'oxydation biologique d'une partie de la matière organique du produit à sécher.

Donc, deux principes fondamentaux et simultanés gèrent le phénomène de séchage :
⇒ transfert de chaleur pour évaporer le liquide à la surface du solide.
⇒ transfert de matière à l'intérieur du solide vers la surface, couplé au transfert de vapeur d'eau pour saturer les gaz de séchage.

Pour s'affranchir du caractère limitant de la diffusion de l'eau dans les boues vers la surface, il est donc utile de renouveler la surface d'échange, et d'assurer une alimentation en matériau nouveau en une couche uniforme et peu épaisse.

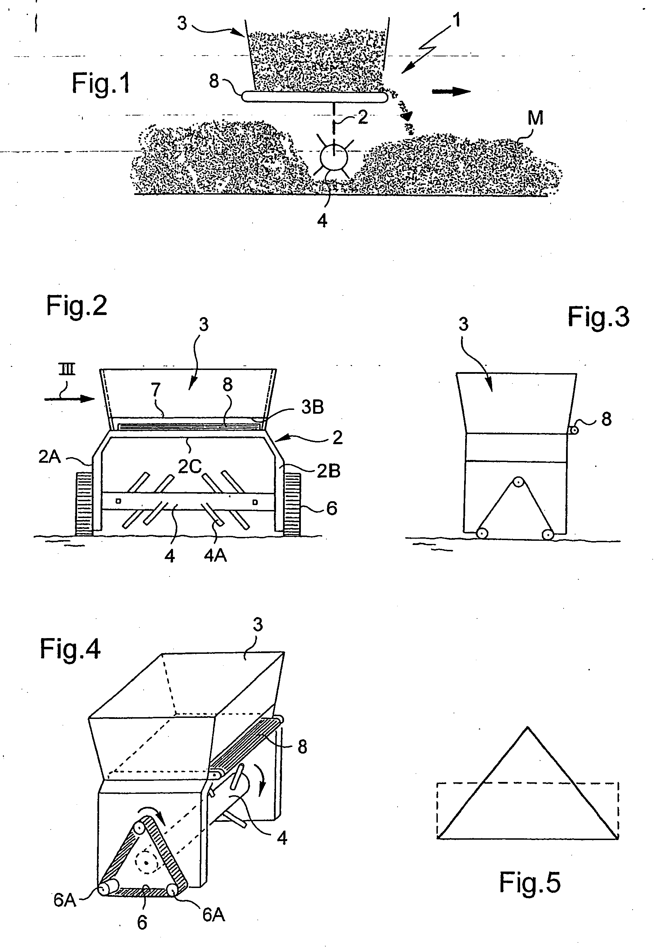

Ceci est réalisé d'une manière particulièrement efficace par le dispositif schématisé sur la figure 1, qui assure à la fois l'alimentation de tas allongés en matériau humide à sécher et le retournement de ces tas.

Ce dispositif 1 comporte essentiellement, montés sur un châssis dirigeable schématisé sous la référence 2, en partie haute un sous-ensemble 3 de distribution de matériau humide en vrac adapté à distribuer en couche ce matériau humide, sur le sol (ou sur une bande de matériau M déjà déposée au sol et en cours de séchage), et en partie basse un sous-ensemble de retournement 4 comportant un système de brassage adapté à brasser au moins cette couche (et la bande sous-jacente). On peut noter que, le dispositif se déplaçant vers la droite (voir la flèche dirigée vers la droite), le sous-ensemble 3 est ouvert en son extrémité droite, de sorte que le matériau humide qui en sort (voir la ligne en pointillés) est elle-même retournée et mélangée avec le reste de la bande sous-jacente dès son dépôt.

Ce dispositif est utilisé préférentiellement pour sécher des boues municipales déshydratées. Elles peuvent être primaires, biologiques, mixtes ou digérées. Le séchage solaire peut permettre de sécher d'autres produits en mélange avec les boues comme les graisses qui apportent des nutriments lors de la phase de compostage et ainsi réduisent les problèmes de traitement des graisses.

Mais ce dispositif peut également être utilisé pour sécher d'autres matériaux humides tels que végétaux, etc...

Tel que représenté aux figures 2 à 4, le dispositif schématisé sous la référence à la figure 1 comporte le châssis 2, qui comporte deux parois latérales 2A et 2B destinées à longer latéralement le tas (non représenté), et une table horizontale 2C reliant ces parois latérales.

Entre les parois latérales est monté, transversalement à la direction de mouvement du dispositif, un arbre du rotor 4, sur lequel sont montés des bras de retournement 4A, dont la forme et le positionnement (ici en biais) sont avantageusement choisis (de façon connue en soi) pour favoriser l'obtention, après brassage-retournement, d'un tas de section globalement triangulaire (voir la figure 5).

Ce châssis est muni de moyens de roulage au sol, ici formés de chenilles 6 montées sur un ensemble de galets motorisés ou libres, ici au nombre de trois, entraîné en rotation par un moteur de tout type connu approprié (non représenté). Comme on le sait, en donnant des vitesses différentes aux chenilles, il est facile de provoquer un mouvement vers la droite ou vers la gauche du dispositif 1.

Au-dessus de la table 2C se trouve le dispositif 3 de distribution de matériau humide en vrac, comportant typiquement un réservoir contenant du matériau humide en vrac et muni en partie basse d'une ouverture transversale de distribution et de dosage 7, en pratique en forme de fente.

Dans l'exemple représenté, cette ouverture est de largeur (il s'agit de sa plus petite dimension, perpendiculairement à la largeur du dispositif) réglable.

Elle est de préférence ménagée entre un bord du fond 8 du réservoir et un bord inférieur 3B d'une portion de paroi.

Ce fond 8 est avantageusement mobile dans le sens de déplacement du dispositif, de préférence sous la forme d'un tapis mobile.

Quant au bord 3B il est avantageusement ménagé sur une portion mobile formant trappe (ici la paroi droite, à la figure 4, qui peut par exemple glisser verticalement dans son ensemble, dans des glissières non représentées ménagées le long des bords des parois latérales du réservoir).

Le fond mobile 8 et la trappe permettent conjointement de régler le débit de matériau humide en vrac, tandis que le fond mobile permet de régler la vitesse de distribution de ce matériau.

En variante non représentée, ce réservoir peut être une trémie, en forme de pyramide renversée, avec une fente de distribution en son extrémité basse.

Le dispositif 1 est avantageusement capable de se mouvoir dans deux sens d'avance opposés (donc aussi bien vers la droite que vers la gauche, à la figure 3) ; pour cela il suffit de prévoir que la motorisation des galets soit réversible ; dans ce cas, il est intéressant de prévoir que chacune des parois transversales du réservoir puisse définir une ouverture avec le fond, et que ce fond puisse se déplacer aussi vers la droite et vers la gauche.

### Fonctionnement:

Dans l'exemple analysé ci-dessus, la machine est utilisée lors d'un cycle de production combinant les fonctions de stockage longue durée et de séchage proprement dit, dans le cas de séchage de boues.

Le cycle peut avoir une durée variable allant typiquement de quelques mois à une année.

Le cycle débute idéalement en août pour permettre d'avoir à l'entrée de la période moins propice au séchage (typiquement fin automne - hiver) des boues en mélange qui ont une siccité compatible avec du compostage qui vient alors compléter le peu de rayonnement présent durant ces périodes. Lorsque les boues séchées sont valorisées en agriculture, ceci permet également, lors de cycles d'une année (cas le plus fréquent), de vider l'installation au mois de juillet, période à laquelle elles peuvent être utilisées directement.

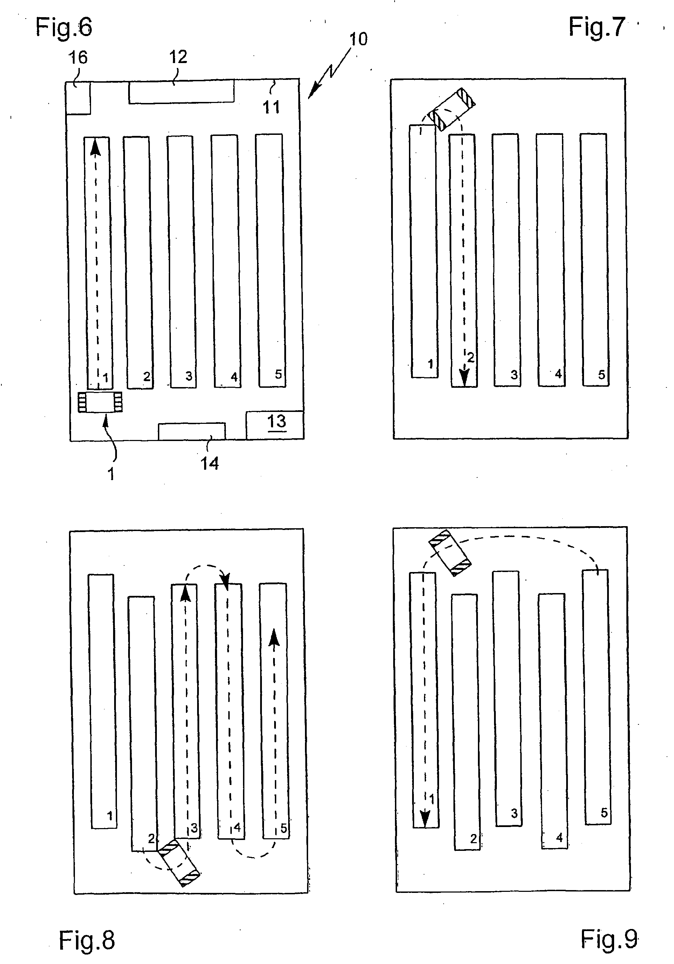

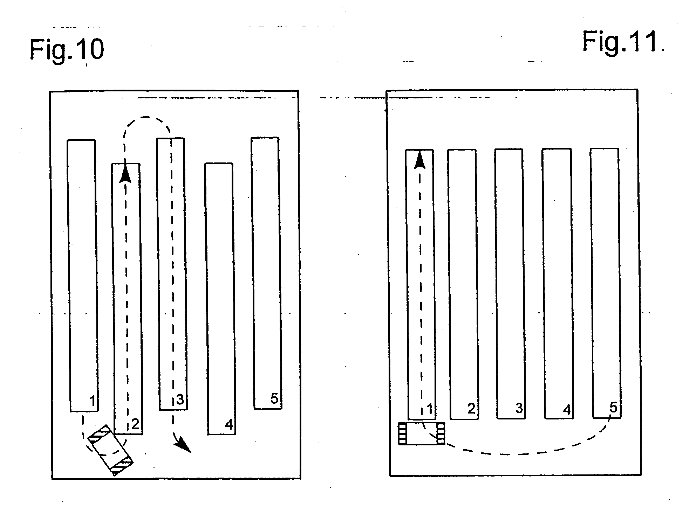

Une installation 10 permettant la mise en oeuvre du procédé de l'invention est représentée aux figures 6 à 11. Elle comporte :
➢ Une serre horticole 11 posée sur une aire étanche. Un muret périphérique de hauteur modérée (non représenté) protége avantageusement la structure de la serre lors de la manutention des boues.
➢ Un dispositif de retournement des andains tel que le dispositif 1 des figures 1 à 4. Par sa fonction de retournement, le dispositif assure l'homogénéisation, l'aération et le renouvellement de la surface d'échange de séchage. Le dispositif peut être automatisé, semi-automatisé ou manuel. Par sa fonction de distribution, le dispositif assure l'apport journalier ou régulier en produit frais sur les andains en cours de séchage. Cette fonction peut être automatisée, semi automatisée ou manuelle.
➢ Un ensemble automatisé de ventilation d'air de séchage, schématisé sous la référence 12. Cette ventilation comporte en outre des ouies à une extrémité de la serre et des extracteurs à l'autre extrémité de la serre. Ces extracteurs sont par exemple des ventilateurs de type centrifuge. Cet ensemble peut être régulé sur l'humidité de l'air régnant à l'intérieur de la serre. Cet ensemble offre avantageusement un taux de renouvellement moyen de l'air de 10 volumes de serre par heure. Ce taux varie bien sûr en fonction de la température de l'air de séchage et d'humidité relative. Selon les cas, l'air extérieur aspiré à l'intérieur de la serre peut être avantageusement préchauffé de manière à augmenter le rendement de l'installation.
➢ Optionnellement, un ensemble de ventilation d'air de brassage (schématisé sous la référence 13) permet une homogénéisation de l'air à l'intérieur de la serre. Cet ensemble offre un taux de brassage de l'air important : il se situe entre 10 et 50 volumes de serre selon la géométrie de la serre (de préférence entre 10 et 30).
➢ Optionnellement, un ensemble de traitement de l'air extrait sur un filtre de bio-désodorisation (par exemple, de préférence, celui décrit dans notre brevet FR 2711922) ou par voie chimique (schématisé sous la référence 14). Le choix du mode de traitement est fait en fonction de la nature du gaz à traiter et donc de celle des boues en cours de séchage.
➢ Optionnellement, un ensemble d'instrumentation (schématisé sous la référence 16) servant à contrôler l'ambiance à l'intérieur de la serre (température, hygrométrie) et des détecteurs de gaz nocifs ou explosifs (CH4 (explosivité), H2S ; NH3, etc ...), en vue de réguler efficacement la ventilation et le brassage.

Le matériau humide à sécher est déposé dans la serre sous la forme d'un andain (la forme triangulaire de l'andain offre une surface de transfert plus importante que dans le cas d'une couche horizontale pour un volume de boue et de largeur équivalente, ainsi que cela ressort de la figure 5 où une configuration en couche d'épaisseur constante est représentée en pointillés à des fins de comparaison).

En fait, régulièrement (de chaque jour à chaque semaine) on dépose grâce à notre machine le nouveau matériau humide sur le produit en cours de séchage.

Le dispositif de retournement assure outre la distribution du nouveau matériau humide à sécher, le mélange, l'aération nécessaire à la fermentation, le renouvellement de la surface d'échange pour le séchage et la réalisation de l'andain.

Les rayons solaires chauffent la surface de l'andain ce qui entraîne localement une augmentation de la pression de vapeur de l'eau et donc augmente le transfert de matière d'eau sous forme liquide des boues vers l'air ambiant sous forme vapeur.

L'air ambiant se charge en eau. Il sert à évacuer l'eau hors de la serre. Il n'est donc utilisé que pour transporter l'humidité prélevée aux boues de l'intérieur de la serre vers l'extérieur.

Pour éviter un phénomène de saturation de l'air en eau (qui alors empêche le séchage), on utilise des ventilateurs qui permettent de renouveler l'air ambiant de la serre.

Même la nuit, sans présence de soleil, on sèche les boues. Il suffit que l'air ambiant ne soit pas saturé et que les boues en surface à l'interface avec l'air ambiant contiennent de l'eau en quantité supérieure à l'équilibre pour lequel on ne peut plus avoir de transfert.

Le pouvoir d'évaporation varie en fonction du rayonnement solaire. Des valeurs trouvées dans la littérature indiquent des capacités d'évaporation d'eau d'environ 800 kg/m²/an dans le nord de la France jusqu'à 1200 - 1400 kg/m2/an dans la partie sud..

La surface extérieure du tas est balayée par de l'air qui se charge en eau. Cet air est extrait de la serre pour assurer un renouvellement suffisant avec de l'air plus sec.

L'air chargé en humidité est évacué vers l'extérieur par des extracteurs à travers par exemple une désodorisation de type autotrophe telle que décrite dans notre brevet FR 2711922 ou par voie chimique (tel que notre procédé connu sous la marque " Aquilair ".

De plus des ventilateurs de brassage assurent l'homogénéisation de l'air intérieur pour éviter les zones mortes chargées en humidité.

Comme lors du compostage; les tas sont retournés régulièrement de façon à substituer la boue sèche en surface par de la boue plus humide.

Le fonctionnement de l'aération est régulé en fonction de l'humidité de l'air à l'intérieur de la serre, et des conditions météorologiques extérieures.

### Gestion du procédé

En début de cycle, on étale le matériau humide à sécher, sous forme de bandes de 2m de large de manière à occuper toute la surface de la serre. Cette opération est réalisée à l'aide d'un chargeur, de préférence du dispositif des figures 2 à 4.

Ainsi dans les travées (couramment appelées chapelles) de 12,60 m, on peut réaliser 5 bandes de 2 m de large et dans les chapelles de 8,0 m on peut réaliser 3 andains.

Chaque jour ou cycle de chargement des bandes avec du matériau humide, on rajoute la quantité de boues sur toute la surface des bandes à l'aide du dispositif 1.

Le dispositif de retournement retourne les bandes plusieurs fois par jour (le nombre de retournement varie suivant la période, en été leur nombre sera plus important qu'en hiver).

Au cours du cycle annuel, la quantité de boues par bande augmente, la bande s'épaissit mais le dispositif 1 donne une forme d'andain à chaque bande.

Le dimensionnement de la serre tient compte de la hauteur maxi que peut avoir l'andain au cours d'une période.

Ainsi pour un andain de 2 m de large, la hauteur maxi est de 1 m (angle de talus de 45°).

Le dispositif 1 est une machine à retourner l'andain automotrice (elle peut être électrique ou thermique). Il est clair que dans la version préférée ce sera un moteur électrique pour éviter tout dégagement de gaz d'échappement dans l'enceinte fermée que constitue la serre. L'entraînement est en principe réalisé par un moto-réducteur ; le réglage de la distribution, visant à réguler le débit de produit nouveau à deverser, peut être manuel ou motorisé.

Cette machine permet à la fois d'alimenter le procédé en boue et d'assurer le retournement du produit en cours de séchage. A noter que la boue est déposée légèrement en avant de la machine ce qui permet d'effectuer son mélange dans les meilleures conditions, en même temps que le retournement. La machine peut être automatisée, semi automatisée ou manuelle. L'automatisation de la machine est essentiellement basée sur son guidage.

Différentes technologies de guidage peuvent être utilisées :
- les systèmes optiques (type laser).
- le GPS.
- le transpondeur.
- le filoguidage. C'est ce système qui est la version préférée.

Lors du premier retournement de la journée (figure 6), le dispositif 1 de retournement avance sur le premier andain en étant filoguidé, il pratique le retournement du premier andain. Arrivé au bout de l'andain (figure 7) il passe sur le second andain situé à coté du premier andain grâce à des transpondeurs. Il retourne le second andain et ainsi de suite avec les andains 3, 4 et 5 (figure 8). Lors d'un retournement d'un andain, cet andain se déplace un peu dans le sens du chargeur.

Lors du deuxième retournement (figure 9), le retourneur revient sur l'andain mais dans le sens inverse du premier retournement, ainsi il a tendance à faire déplacer l'andain dans ce qui était sa position initiale avant les retournements.

### Particularités de l'invention:

Le procédé de l'invention utilise une machine tout à fait particulière, conçue à l'a fois pour la mise en andain du produit à traiter et son retournement au cours du séchage. C'est au moins en cela que le dispositif 1 se différencie des retourneurs traditionnels.

La disposition du produit en andain est également une originalité du procédé qui présente un avantage par rapport aux solutions connues. En effet, à emprise au sol égale, la surface d'échange avec l'air de séchage est plus importante dans le cas d'un andain comme le montre le schéma ci-après:

Dans le cas de boues organiques, ce procédé favorise le développement de la fermentation aérobie et du séchage. La phase de fermentation aérobie dure le plus longtemps possible grâce au maintien de conditions hydriques idéales.

Le développement des réactions de fermentation aérobie va permettre l'augmentation rapide de la température et donc favoriser l'évaporation de l'eau même lors des jours de faible ensoleillement et de manière non négligeable l'hygiénisation du produit.

## Revendications

1. Procédé de séchage solaire d'un matériau humide en vrac selon lequel on étale ce matériau humide en couches successives en sorte de former une masse humide (M), chaque couche étant, juste après son étalement, mélangée mécaniquement (4) avec la masse humide sous-jacente, grâce à quoi ce matériau humide est retourné et mélangé dès son dépôt, ce qui assure à la fois l'alimentation de tas allongés en matière humide à sécher et le retournement de ces tas.

2. Procédé selon la revendication 1, **caractérisé en ce que** les couches sont formées en bandes allongées sur lesquelles on étale une nouvelle couche de matériau humide en vrac et on mélange cette couche avec la bande sous-jacente, dans un sens longitudinal puis dans l'autre.

3. Procédé selon la revendication 2, **caractérisé en ce que** les couches sont formées en une pluralité impaire de bandes adjacentes, l'étalement de chaque couche se faisant dans un premier sens sur une première bande puis dans le sens inverse sur la bande adjacente, l'étalement sur une bande commençant près de là où s'est terminé l'étalement sur la bande précédente, puis, après étalement sur la dernière bande, un nouveau étalement sur la première bande dans ledit sens inverse.

4. Procédé selon l'une quelconque des revendications 1 à 3, **caractérisé en ce que** le mélange mécanique est réalisé en sorte de donner à la masse mélangée une forme en andain.

5. Procédé selon l'une quelconque des revendications 1 à 4, **caractérisé en ce que** cette masse humide a une hauteur comprise entre 0.5 m et 3 m et une largeur de l'ordre de quelques mètres.

6. Procédé selon l'une quelconque des revendications 1 à 5, **caractérisé en ce que** la masse humide est formée dans une serre dont le volume d'air est renouvelé (12) au moins 5 fois par heure.

7. Procédé selon la revendication 6, **caractérisé en ce que** ce volume d'air est mis en circulation interne avec un taux de 10 à 50 fois par heure.

8. Procédé selon la revendication 6 ou la revendication 7, **caractérisé en ce que** l'on surveille (16) la température, l'hygrométrie et la teneur en gaz prédéterminés de ce volume d'air et on régule en conséquence le renouvellement.

9. Procédé selon l'une quelconque des revendications 1 à 8, **caractérisé en ce que** le matériau humide en vrac est formé de boues et l'on étale une nouvelle couche de ce matériau humide en vrac et on la mélange à la masse sous-jacente à une fréquence comprise entre de l'ordre d'une fois par heure et de l'ordre d'une fois par semaine.

10. Procédé selon l'une quelconque des revendications 1 à 9, **caractérisé en ce que** l'on procède à au moins une opération supplémentaire de retournement de la masse humide entre plusieurs étapes d'étalement d'une nouvelle couche.

11. Dispositif de traitement de matériau humide en vrac, destiné à la mise en oeuvre du procédé selon l'une quelconque des revendications 1 à 10, comportant un châssis dirigeable (2) portant, en partie haute, un sous-ensemble (3) de distribution de matériau humide en vrac destiné à distribuer en couche ce matériau humide sur le sol et, en partie basse, un sous-ensemble de retournement (4) comportant un système de brassage adapté à brasser au moins cette couche, en retournant et mélangeant le matériau humide dès son dépôt, assurant à la fois l'alimentation de tas allongés en matériau humide à sécher et le retournement de ces tas.

12. Dispositif selon la revendication 11, **caractérisé en ce que** le sous-ensemble de retournement comporte un rotor horizontal transversal muni de bras en saillie (4A).

13. Dispositif selon la revendication 11 ou la revendication 12, **caractérisé en ce que** le sous-ensemble de retournement est conformé en sorte que, après action sur un tas au sol, celui-ci ait la forme d'un andain.

14. Dispositif selon l'une quelconque des revendications 11 à 13, **caractérisé en ce que** le sous-ensemble de distribution (3) comporte un réservoir de matériau humide en vrac muni en partie basse d'une ouverture (7) transversale de distribution et de dosage de ce matériau humide en vrac.

15. Dispositif selon la revendication 14, **caractérisé en ce que** l'ouverture de distribution et de dosage est de largeur réglable.

16. Dispositif selon la revendication 14 ou la revendication 15, **caractérisé en ce que** l'ouverture transversale est ménagée entre un bord d'un fond (8) et un bord inférieur (3B) d'une portion de paroi.

17. Dispositif selon la revendication 16, **caractérisé en ce que** ce fond est un tapis roulant (8) adapté à circuler vers l'ouverture.

18. Dispositif selon la revendication 16 ou la revendication 17, **caractérisé en ce que** le bord inférieur est porté par une portion mobile en hauteur formant une trappe réglable.

19. Dispositif selon l'une quelconque des revendications 11 à 18, **caractérisé en ce qu'**il est automoteur, en ayant deux sens opposés d'avance.

20. Dispositif selon la revendication 19, **caractérisé en ce qu'**il est monté sur des chenilles (6).

21. Installation de séchage solaire d'un matériau humide en vrac adaptée à la mise en oeuvre du procédé selon l'une quelconque des revendications 1 à 10, comportant une serre (11) sur une aire étanche, un dispositif (1) selon l'une quelconque des revendications 11 à 20 à l'intérieur de cette serre, et un ensemble automatisé (12) de ventilation de l'air de séchage.

22. Installation selon la revendication 21, **caractérisée en ce qu'**elle comporte en outre un ensemble (13) de brassage interne de l'air de brassage.

23. Installation selon la revendication 21 ou la revendication 22, **caractérisée en ce que** l'ensemble de ventilation de l'air de séchage comporte, en sortie, un élément de traitement chimique ou de filtrage de l'air (14).

24. Installation selon l'une quelconque des revendications 21 à 23, **caractérisée en ce qu'**elle comporte des éléments complémentaires ménagés sur le dispositif de traitement de matériau humide en vrac et en dehors de celui-ci en vue de son guidage selon une trajectoire à l'intérieur de la serre.

25. Installation selon l'une quelconque des revendications 21 à 24, **caractérisée en ce qu'**elle comporte en outre un système de régulation coopérant avec des capteurs de température et d'hygrométrie (16) à l'intérieur de la serre.

26. Installation selon la revendication 25, **caractérisée en ce que** le , système de régulation est en relié à des capteurs de gaz adaptés à surveiller la teneur en des gaz nocifs prédéterminés.

## Claims

1. Method of solar drying of a damp bulk material according to which the damp material is laid out in successive layers so as to form a damp mass (M), each layer, immediately after laying out, being mechanically mixed (4) with the underlying damp mass, as a result of which the damp material is turned and mixed as soon as it has been deposited, ensuring both the feeding of elongated heaps with damp material to be dried and the turning of these heaps.

2. Method according to claim 1, **characterized in that** the layers are formed in elongated strips onto which a new layer of damp bulk material is laid and this layer is mixed with the underlying strip in one longitudinal direction then the other.

3. Method according to claim 2, **characterized in that** the layers are formed in an odd number plurality of adjacent strips, the laying out of each layer being carried out in a first direction on a first strip then in the opposite direction on the adjacent strip, the laying out onto a strip starting close to the place where the laying out onto the previous strip stopped, then, after laying out onto the last strip, a new laying out takes place on the first strip in said opposite direction.

4. Method according to any one of claims 1 to 3, **characterized in that** the mechanical mixing is carried out so as to give the mixed mass the form of a windrow.

5. Method according to any one of claims 1 to 4, **characterized in that** the height of the damp mass is comprised between 0.5 m and 3 m and the width is of the order a few metres.

6. Method according to any one of claims 1 to 5, **characterized in that** the damp mass is formed in a greenhouse the volume of air of which is renewed (12) at least 5 times per hour.

7. Method according to claim 6, **characterized in that** the volume of air is internally circulated at a rate of 10 to 50 times per hour.

8. Method according to claim 6 or claim 7, **characterized in that** the temperature, hygrometry and content of predetermined gasses of this volume of air are monitored (16) and the renewal rate is adjusted accordingly.

9. Method according to any one of claims 1 to 8, **characterized in that** the damp bulk material is formed from sludge and a new layer of this damp bulk material is laid out and mixed with the underlying mass at a frequency comprised between of the order of once per hour and of the order of once per week.

10. Method according to any one of claims 1 to 9, **characterized in that** at least one additional operation of turning the damp mass is carried out between several steps of laying out a new layer.

11. Device for treating damp bulk material, intended for implementation of the method according to any one of claims 1 to 10, including a steerable frame (2) bearing, on the upper part, a sub-assembly (3) for the distribution of damp bulk material intended for distributing this damp material in layers on the ground and, on the lower part, a sub-assembly for turning (4) including an agitating system suitable for agitating at least this layer, by turning and mixing the damp material as soon as it has been deposited, ensuring both the supply of elongated heaps with damp material to be dried and the turning of these heaps.

12. Device according to claim 11, **characterized in that** the sub-assembly for turning includes a transverse horizontal rotor equipped with projecting arms (4A).

13. Device according to claim 11 or claim 12, **characterized in that** the sub-assembly for turning is shaped such that, after acting on a heap on the ground, the latter adopts the form of a windrow.

14. Device according to any one of claims 11 to 13, **characterized in that** the distribution sub-assembly (3) includes a tank of damp bulk material provided in the bottom part with a transverse opening (7) for the distribution and application of this damp bulk material.

15. Device according to claim 14, **characterized in that** the distribution and application opening is adjustable widthwise.

16. Device according to claim 14 or claim 15, **characterized in that** the transverse opening is arranged between an edge of a bottom (8) and a lower edge (3B) of a wall portion.

17. Device according to claim 16, **characterized in that** this bottom is a conveyor belt (8) suitable for moving towards the opening.

18. Device according to claim 16 or claim 17, **characterized in that** the lower edge is borne by an upwardly mobile portion forming an adjustable flap.

19. Device according to any one of claims 11 to 18, **characterized in that** it is self-propelling, having two opposite directions of advance.

20. Device according to claim 19, **characterized in that** it is mounted on tracks (6).

21. Installation for solar drying of a damp bulk material suitable for implementing the method according to any one of claims 1 to 10, including a greenhouse (11) over a sealed area, a device (1) according to any one of claims 11 to 20 inside the greenhouse, and an automated assembly (12) for venting the drying air.

22. Installation according to claim 21, **characterized in that** it includes moreover an internal assembly (13) for mixing the drying air.

23. Installation according to claim 21 or claim 22, **characterized in that** the drying air venting assembly includes, at the outlet, an element for the chemical treatment or filtering of the air (14).

24. Installation according to any one of claims 21 to 23, **characterized in that** it includes additional elements arranged on the outside of the device for the treatment of damp bulk material for guiding it on a path inside the greenhouse.

25. Installation according to any one of claims 21 to 24, **characterized in that** it includes moreover a regulating system cooperating with temperature and hygrometry sensors (16) inside the greenhouse.

26. Installation according to claim 25, **characterized in that** the regulating system is linked to gas sensors suitable for monitoring the content of predetermined harmful gasses.

## Patentansprüche

1. Verfahren zum Trocknen mittels Sonnenstrahlung eines feuchten Materials in loser Schüttung, wobei dieses feuchte Material in aufeinander folgenden Schichten ausgebreitet wird, derart, dass eine feuchte Masse (M) gebildet wird, wobei jede Schicht direkt nach ihrer Ausbreitung mit der darunter befindlichen feuchten Masse mechanisch gemischt (4) wird, kraft dessen dieses feuchte Material umgewendet und ausgehend von seinem Bodensatz gemischt wird, wodurch zugleich die Versorgung mit länglichen Haufen aus zu trocknendem feuchten Material und die Umwendung dieser Haufen sichergestellt sind.

2. Verfahren nach Anspruch 1, **dadurch gekennzeichnet, dass** die Schichten aus lang gestreckten Streifen gebildet sind, auf denen eine neue Schicht aus feuchtem Material in loser Schüttung ausgebreitet wird, und diese Schicht mit dem darunterliegenden Streifen in einem longitudinalen Richtungssinn und dann im Anderen gemischt wird.

3. Verfahren nach Anspruch 2, **dadurch gekennzeichnet, dass** die Schichten aus einer ungeradzahligen Mehrzahl benachbarter Streifen gebildet sind, wobei die Ausbreitung jeder Schicht in einem ersten Richtungssinn auf einem ersten Streifen und dann im entgegengesetzten Richtungssinn auf dem benachbarten Streifen erfolgt, wobei die Ausbreitung eines Streifens in der Nähe der Stelle beginnt, an der die Ausbreitung auf dem vorhergehenden Streifen geendet hat, woraufhin nach der Ausbreitung auf dem letzten Streifen eine neue Ausbreitung auf dem ersten Streifen im entgegengesetzten Richtungssinn erfolgt.

4. Verfahren nach einem der Ansprüche 1 bis 3, **dadurch gekennzeichnet, dass** das mechanische Mischen in der Weise ausgeführt wird, dass der gemischten Masse eine Schwadenform verliehen wird.

5. Verfahren nach einem der Ansprüche 1 bis 4, **dadurch gekennzeichnet, dass** diese feuchte Masse eine Höhe im Bereich von 0,5 m bis 3 m und eine Breite in der Größenordnung von einigen Metern hat.

6. Verfahren nach einem der Ansprüche 1 bis 5, **dadurch gekennzeichnet, dass** die feuchte Masse in einem Gewächshaus gebildet wird, dessen Luftvolumen wenigstens fünfmal pro Stunde erneuert (12) wird.

7. Verfahren nach Anspruch 6, **dadurch gekennzeichnet, dass** dieses Luftvolumen mit einer Rate von zehn- bis fünfzigmal pro Stunde in interne Zirkulation versetzt wird.

8. Verfahren nach Anspruch 6 oder Anspruch 7, **dadurch gekennzeichnet, dass** die Temperatur, die Luftfeuchtigkeit und der Gehalt an vorgegebenen Gasen dieses Luftvolumens überwacht werden und die Erneuerung entsprechend reguliert wird.

9. Verfahren nach einem der Ansprüche 1 bis 8, **dadurch gekennzeichnet, dass** das feuchte Material in loser Schüttung als Schlamm gebildet ist und dass eine neue Schicht dieses feuchten Materials in loser Schüttung ausgebreitet wird und mit der darunterliegenden Masse mit einer Häufigkeit gemischt wird, die in der Größenordnung von einmal pro Stunde bis in der Größenordnung von einmal pro Woche liegt.

10. Verfahren nach einem der Ansprüche 1 bis 9, **dadurch gekennzeichnet, dass** wenigstens ein zusätzlicher Umwendevorgang der feuchten Masse zwischen mehreren Ausbreitungsschichten einer neuen Schicht erfolgt.

11. Vorrichtung zum Behandeln von feuchtem Material in loser Schüttung, die für die Ausführung des Verfahrens nach einem der Ansprüche 1 bis 10 bestimmt ist, die ein lenkbares Chassis (2) umfasst, das im oberen Teil eine Untereinheit (3) für die Verteilung von feuchtem Material in loser Schüttung trägt, der dazu bestimmt ist, dieses feuchte Material auf dem Boden als Schicht zu verteilen, und im unteren Teil eine Umwendeunteranordnung (4) trägt, die ein Durchmischungssystem umfasst, das dazu ausgelegt ist, wenigstens diese Schicht zu durchmischen, indem es das feuchte Material ausgehend von seinem Bodensatz umwendet und mischt, wodurch zugleich die Versorgung mit lang gestreckten Haufen aus zu trocknendem feuchten Material und die Umwendung dieser Haufen sichergestellt sind.

12. Vorrichtung nach Anspruch 11, **dadurch gekennzeichnet, dass** die Umwendeunteranordnung einen transversalen horizontalen Rotor umfasst, der mit einem vorstehenden Arm (4A) versehen ist.

13. Vorrichtung nach Anspruch 11 oder Anspruch 12, **dadurch gekennzeichnet, dass** die Umwendeunteranordnung in der Weise beschaffen ist, dass nach der Einwirkung auf einen Haufen auf dem Boden dieser die Form einer Schwade hat.

14. Vorrichtung nach einem der Ansprüche 11 bis 13, **dadurch gekennzeichnet, dass** die Verteilungsunteranordnung (3) einen Vorratsbehälter für feuchtes Material in loser Schüttung umfasst, der im unteren Teil mit einer transversalen Öffnung (7) für die Verteilung und Dosierung dieses feuchten Materials in loser Schüttung versehen ist.

15. Vorrichtung nach Anspruch 14, **dadurch gekennzeichnet, dass** die Verteilungs- und Dosierungsöffnung eine einstellbare Weite besitzt.

16. Vorrichtung nach Anspruch 14 oder Anspruch 15, **dadurch gekennzeichnet, dass** die transversale Öffnung zwischen einem Rand eines Bodens (8) und einem unteren Rand (3B) eines Wandabschnitts ausgebildet ist.

17. Vorrichtung nach Anspruch 16, **dadurch gekennzeichnet, dass** der Boden ein Förderband (8) ist, das dazu ausgelegt ist, zur Öffnung umzulaufen.

18. Vorrichtung nach Anspruch 16 oder Anspruch 17, **dadurch gekennzeichnet, dass** der untere Rand von einem in Höhenrichtung beweglichen Abschnitt getragen wird, der eine einstellbare Klappe bildet.

19. Vorrichtung nach einem der Ansprüche 11 bis 18, **dadurch gekennzeichnet, dass** sie ein Fahrzeug mit Eigenantrieb ist, das zwei zueinander entgegengesetzte Vorwärtsbewegungsrichtungen hat.

20. Vorrichtung nach Anspruch 19, **dadurch gekennzeichnet, dass** sie auf Raupenketten (6) montiert ist.

21. Anlage zum Trocknen mittels Sonne eines feuchten Materials in loser Schüttung, die dazu ausgelegt ist, das Verfahren nach einem der Ansprüche 1 bis 10 auszuführen, mit einem Gewächshaus (11) auf einer abgeschlossenen Fläche, einer Vorrichtung (1) nach einem der Ansprüche 11 bis 20 in diesem Gewächshaus und einer automatisierten Anordnung (12) für die Belüftung mit Trocknungsluft.

22. Anlage nach Anspruch 21, **dadurch gekennzeichnet, dass** sie außerdem eine Anordnung (13) zum internen Durchmischen der Durchmischungsluft umfasst.

23. Anlage nach Anspruch 21 oder Anspruch 22, **dadurch gekennzeichnet, dass** die Anordnung zur Belüftung mit Trocknungsluft am Ausgang ein Element zur chemischen Bearbeitung oder Filterung der Luft (14) umfasst.

24. Anlage nach einem der Ansprüche 21 bis 23, **dadurch gekennzeichnet, dass** sie zusätzliche Elemente umfasst, die an der Vorrichtung für die Bearbeitung von feuchtem Material in loser Schüttung und außerhalb desselben ausgebildet sind, um es auf einer Bahn innerhalb des Gewächshauses zu führen.

25. Anlage nach einem der Ansprüche 21 bis 24, **dadurch gekennzeichnet, dass** sie außerdem ein Regulierungssystem umfasst, das mit Sensoren für die Temperatur und die Feuchtigkeit (16) innerhalb des Gewächshauses zusammenwirkt.

26. Anlage nach Anspruch 25, **dadurch gekennzeichnet, dass** das Regulierungssystem mit Gassensoren verbunden ist, die den Gehalt an vorgegebenen schädlichen Gasen überwachen können.
